# EUROPÄISCHE PATENTANMELDUNG

(11) **EP 0 901 868 A1**
(43) Veröffentlichungstag der Anmeldung: **17.03.1999**
(21) Anmeldenummer: 98115704.3
(22) Anmeldetag: 20.08.1998
(51) Int. Cl.: B23K 11/31, B23K 11/25

(54) **Widerstandspressschweissmaschine**

(30) Priorität: 04.09.1997 DE 19738647
(71) Anmelder: Messer Griesheim Schweisstechnik GmbH + Co., D-64823 Gross-Umstadt (DE)
(72) Erfinder: Schmid-Dörnte, Jürgen, 86940 Schwifting (DE)
(74) Vertreter: Berdux, Klaus, Dipl.-Ing.

(57) **Zusammenfassung**

Beim Widerstandspreßschweißen entsteht die Wärme für den Schweißpunkt durch gleichzeitige Einwirkung eines elektrischen Stromes und der Elektrodenkraft sowie dem elektrischen Widerstand der zu verschweißenden Werkstoffe im Bereich der Berührungsstelle der Elektroden. Die Werkstücke liegen in der Regel flach aufeinander und werden durch die Elektrodenkraft unter erheblichen Druck in einzelnen Punkten geschweißt. Der Strom und die Elektrodenkraft wird über die Elektroden zugeführt.

Um die Regelbarkeit und die Dynamik der Elektrodenbewegung zu erhöhen, wird erfindungsgemäß ein regelbarer elektromotorischer Antrieb (13), der eine Antriebsspindel (16) oder eine Zahnstange aufweist, eingesetzt.

## Beschreibung

Die Erfindung betrfft eine Widerstandspreßschweißmaschine, bestehend aus mindestens einem Schweißkopf mit einer Elektrode, mindestens einem Schweißtransformator zum Erzeugen eines Schweißstromes, der mit der Elektrode verbunden ist, mindestens einem Antrieb zum Verfahren der Elektrode oder zum Erzeugen eines Elektrodendruckes auf dem Werkstück und einer Steuerung, die mit dem Antrieb und dem Schweißtransformator verbunden ist.

Beim Widerstandspreßschweißen entsteht die Wärme für den Schweißpunkt durch gleichzeitige Einwirkung eines elektrischen Stromes und der Elektrodenkraft sowie dem elektrischen Widerstand der zu verschweißenden Werkstoffe im Bereich der Berührungsstelle der Elektroden. Die Werkstücke liegen in der Regel flach aufeinander und werden durch die Elektrodenkraft unter erheblichen Druck in einzelnen Punkten geschweißt. Der Strom und die Elektrodenkraft wird über die Elektroden zugeführt.

Bekannte Widerstandspreßschweißmaschinen sind als Ein- oder Mehrphasen-Maschinen ausgebildet. Die Betätigung (Vorschub) der beweglichen Elektrode und die Aufbringung des Elektrodendruckes auf das Werkstück erfolgt durch pneumatische Zylinder. Nur in seltenen Fällen werden zum Aufbringen der Elektrodenkraft andere Antriebe, wie zum Beispiel Hydraulikzylinder und mechanische Verstellungen (zum Beispiel Nockenwellen) eingesetzt.

Darüber hinaus werden als Träger von beweglichen Schweißzeugen und Schweißzangen Industrieroboter eingesetzt und in einer Reihe von Richtungen nach festgelegten und gespeicherten Programm entlang der zu schweißenden Kanten der Fügeteile von Punkt zu Punkt bewegt. An jeder vorgesehenen Schweißstelle wird die Schweilßzange durch einen Steuerimpuls zum Punktschweißen gebracht. Industrieroboter für das Widerstandspreßschweißen besteht aus Säule und Arm. Am Ende des Arms ist über einen geeigneten Befestigungsflansch das Schweißzeug bzw. die Schweißzange befestigt. Um einen bestimmten Punkt des zu schweißenden Werkstücks anzufahren, wird zunächst die Schweißzange in die Koordinaten X, Y, Z des Punktes gefahren. Da Elektroden in jedem Punkt in einer Stellung senkrecht zur Werkstückoberfläche angeordnet werden müssen, sind bei den Schweißzangen noch durch Drehen, Wenden usw. zwei bis drei weitere Bewegungen notwendig. Dadurch muß die Kinematik der Industrieroboter die Einstellung nach 5 bis 7 Freiheitsgraden ermöglichen.

Diese Bewegungen, elektromotorisch, hydraulisch oder pneumatisch durchgeführt, werden durch eine programmierte Steuerung für jeden Schweißpunkt eingeleitet.

Bei den bekannten Widerstandspreßschweißvorrichtungen ist dabei die Regeleinrichtung für die Elektrodenkraft getrennt von der Einrichtung zur Erzeugung des Elektrodenhubes. Eine hochgenaue, gesteuerte bzw. geregelte Bewegung bzw. Positionierung der Elektroden und der Elektrodenkraft in Abhängigkeit von der jeweiligen Position wäre jedoch wünschenswert.

Der Erfindung liegt die Aufgabe zugrunde, eine Widerstandspreßschweißmaschine zu schaffen, bei der die Regelbarkeit und Dynamik der Elektrodenbewegung und des Elektrodendruckes verbessert ist.

Diese Aufgabe wird erfindungsgemäß durch die Merkmale der Ansprüche 1, 10 und 11 gelöst.

Vorteilhafte Weiterbildungen der Erfindung sind in den Unteransprüchen angegeben.

Durch den Einsatz eines regelbaren elektromotorischen Antriebs, insbesondere eines Servomotors, der eine Antriebsspindel oder eine Zahnstange aufweist, wird die Schnelligkeit, Dynamik, Regelbarkeit, Präzision und Wiederholbarkeit und damit die Prozeßsicherheit erhöht. Die Regeleinrichtung für die Elektrodenkraft und zum Verfahren der Elektrode (Vorschub) werden mittels eines einzigen Antriebs erzeugt, der von einer Steuerung kontrolliert wird, die die Schweißspannung bzw. den Schweißstrom, bzw. die Schweißleistung und/oder die Temperatur des Schweißprozesses steuert und/oder regelt. Der Servoantrieb läßt sich nach Drehmoment, Geschwindigkeit und Lage mit hoher Präzision regeln. Digitale, integrierte Meßsysteme, wie Weg- und Drehzahlmomentgeber, im Antrieb erlauben Präzisionen von 1/4000 Umdrehung bis 1/400000 Umdrehung. Die Verwendung von elektrischen Servoantrieben als Schweißkopfzustellachse ermöglicht eine hohe Präzision und digitale Regelbarkeit bei der Widerstandspreßschweißung, die die Wiederholbarkeit und Prozeßsicherheit erhöht. Durch die nahezu freie Regelbarkeit in Verbindung mit der Steuerung der Widerstandspreßschweißmaschine lassen sich in Verbindung mit speziellen Stromprogrammen neue Möglichkeiten in der Schweißtechnologie, der Prozeßsicherung und der Taktzeit bei Widerstandspreßschweißmaschinen erschließen. Die Schweißkopfachse kann numerisch angesteuert werden und somit in die bestehende Regelung des Schweißstromsteuergerätes integriert werden.

Vorteilhaft weist der Antrieb einen Weggeber und/oder Drehmomentgeber auf, die jeweils mit einem Vergleicher verbunden sind. Vorteilhaft ist, daß grundsätzlich auf extern angebaute Istwertgeber verzichtet werden kann. Präzision und Dynamik des Regelkreises werden verbessert, die Kosten reduziert.

Dadurch, daß die Vergleiche für den Soll-Istwert-Vergleich in der Steuerung oder dem Antrieb vorgesehen, bzw. angeordnet sind, kann auf separate Weg- oder Drehmomentgeber verzichtet werden. Damit wird der Arbeitsbereich der Widerstandspreßschweißmaschine vergrößert und die Kollisionsgefahren verringert.

Den Vergleichern können so Weg- bzw. Drehmomentsollwerte über Sollwertgeber eingegeben werden. Als Sollwertgeber können analoge und parallele/serielle digitale Sollwertschnittstellen sein. Handpotentiometer, Inkrementalgeber, Sollwertgeneration aus übergeordneten Steuersystemen.

Über einen Soll-Ist-Vergleich wird eine hohe Präzision und Wiederholbarkeit bei größerer Schnelligkeit erreicht.

Durch die Anordnung des Antriebs und der Antriebsspindel parallel nebeneinander, wobei die Kraft des Antriebs über einen Riemen ein Getriebe, eine Membrankupplung, oder Fingerkupplung auf die Antriebsspindel übertragen wird, kann eine besonders kompakte Baueinheit geschaffen werden.

Ein Ausführungsbeispiel der Erfindung ist in der Zeichnung dargestellt und wird im folgenden näher beschrieben:

Es zeigen
- Figur 1: eine schematische Darstellung der Widerstandspreßschweißmaschine nach der Erfindung
- Figur 2: eine schematische Darstellung der parallelen Anordnung des Antriebs und der Antriebsspindel
- Figur 3: ein Programmprofil für den elektrischen Schweißantrieb

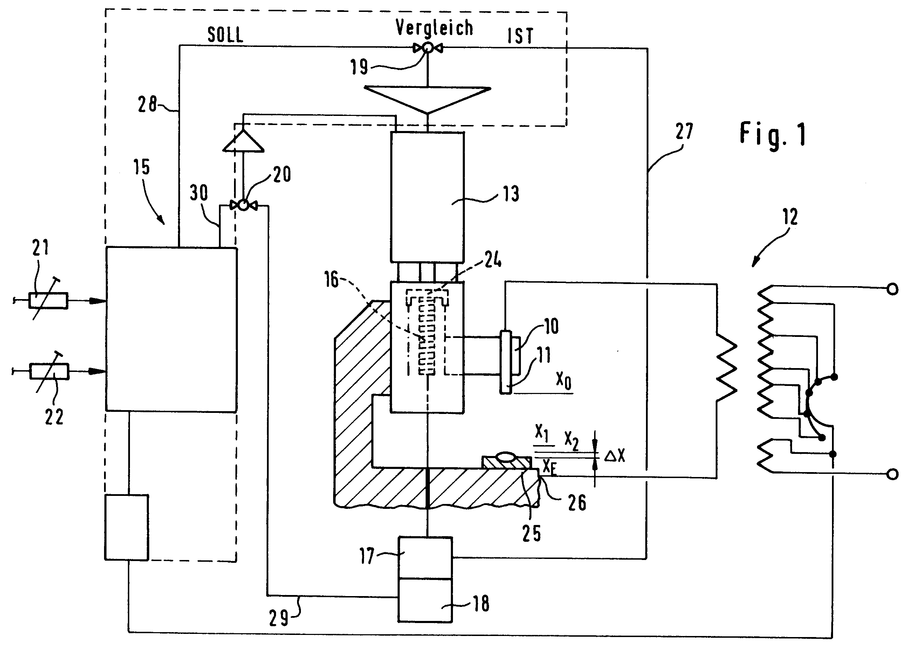

In Figur 1 ist schematisch eine Widerstandspreßschweißmaschine dargestellt, die im wesentlichen aus mindestens einem Schweißkopf 10 als Träger einer Elektrode 11, mindestens einem Schweißtransformator 12 zum Erzeugen eines Schweißstromes, der mit der Elektrode 11 über Anschluß 24 und über Anschluß 26 mit Gegenelektrode 25 verbunden ist, mindestens einem Antrieb 13 zum Verfahren der Elektrode 11 und zum Erzeugen eines Elektrodendruckes auf dem Werkstück 14 und einer Steuerung 15, die mit dem Antrieb 13 und dem Schweißtransformator 12 verbunden ist, besteht.

Der Antrieb 13 ist bevorzugt als Linearmotor oder AC/DC-Servomotor ausgebildet, der über Kupplungselement 24 und Antriebspindel 16 mit dem Schweißkopf 10 so verbunden ist, daß bei Betrieb des Antriebs 13 der Schweißkopf 10 in eine vorgegebene Position verfahrbar ist.

Bei dem Servomotor 13 erfolgt die Rotorbewegung in kleinen, bestimmten Winkelschritten. Diese werden gesteuert durch eine Serie von elektrischen Impulsen, die über ein integriertes Steuergerät oder die Steuerung 15 auf die Statorwindungen gegeben werden. Der Winkel der Rotorumdrehung entspricht der Anzahl der gegebenen Impulse und die Umdrehungsgeschwindigkeit entspricht der Impulsfrequenz.

Der Servomotor weist einen Weggeber 17 auf, mittels dem der von der Steuerung 15 vorgegebene Weg erfaßt und über Leitung 27 ein dem erfaßten Weg entsprechendes Ist-Signal dem Vergleicher 19 zuführt wird. Über Steuerung 15 und Leitung 28 erhält der Vergleicher 19 ein Soll-Signal. Bei Abweichung zwischen dem Ist- und dem Soll-Signal wird der Antrieb 13 so lange betätigt, bis das Soll-Signal dem Ist-Signal entspricht.

Der Antrieb 13 weist weiterhin einen Drehmomentgeber 18 auf, der über Leitung 29 mit einem Vergleicher 20 verbunden ist. In dem Drehmomentgeber 18 wird ein Drehmomentwert der Antriebsspindel 16 bzw. des Rotors des Antriebs 13 erfaßt und als Ist-Signal dem Vergleicher zugeführt. Von der Steuerung 15 erhält der Vergleicher 20 über Leitung 30 ein Soll-Signal, vergleicht das Soll-Signal mit dem Ist-Signal und regelt bei Abweichungen des Drehmomentwertes diesen auf den vorgegebenen Drehmomentwert nach. An der Steuerung sind Sollwertgeber 21, 22 für die Eingabe von Soll-Werten vorgesehen. Als Sollwertgeber können Magnetbänder, Disketten, Scanner ebenso wie Teach-In-Steuerungsgeräte eingesetzt werden. Die Vergleicher 19 und 20 sind in der Steuerung 15 oder im Antrieb 13 vorgesehen.

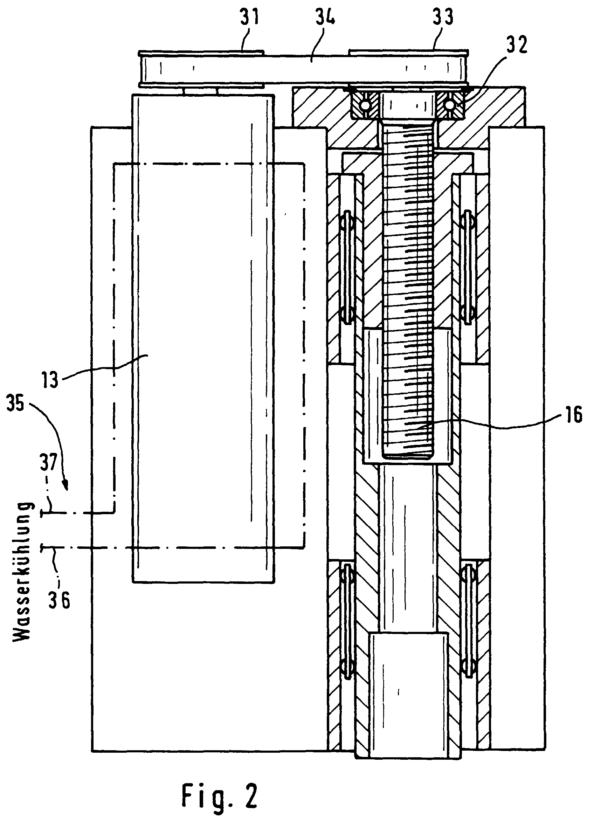

In Figur 2 ist eine parallele Anordnung des Antriebs 13 und der Antriebsspindel 16 dargestellt, wobei gleiche Bauteile mit gleichen Bezugszffiern versehen sind. Der Antrieb weist hierzu ein Antiebsritzel 31 auf, das in Form einer Riemenscheibe ausgebildet ist. Die parallel zur Längsachse des Antriebs 13 und neben dem Antrieb 13 angeordnete Antriebsspindel 16 weist eine mittels Kugellager 32 gelagerte zweite Riemenscheibe 33 auf. Die Kraftübertragung von dem Antrieb 13 auf die Anstriebsspindel 16 erfolgt über einen Riemen 34, der in den Riemenscheiben 31 und 33 liegt. Der Riemen kann als Zahn-, Keil- oder Poly-V-Riementrieb ausgebildet sein. Andere Kupplungselemente 24 zwischen Antrieb und Antriebsspindel sind einsetzbar. Bevorzugt ist dem Antrieb 13 ein Kühlsystem zugeordnet, mittels dem ein höherer Motorwirkungsgrad erzielt wird. Das Kühlsystem ist als Wasserkühlung ausgebildet, wobei über Eingang 36 Kühlwasser zugeführt und über Ausgang 37 Kühlwasser abgeführt wird. Als Kühlflüssigkeit oder -gas können selbstverständlich auch unterkühlte Flüssigkeiten oder Öl, oder Luft eingesetzt werden.

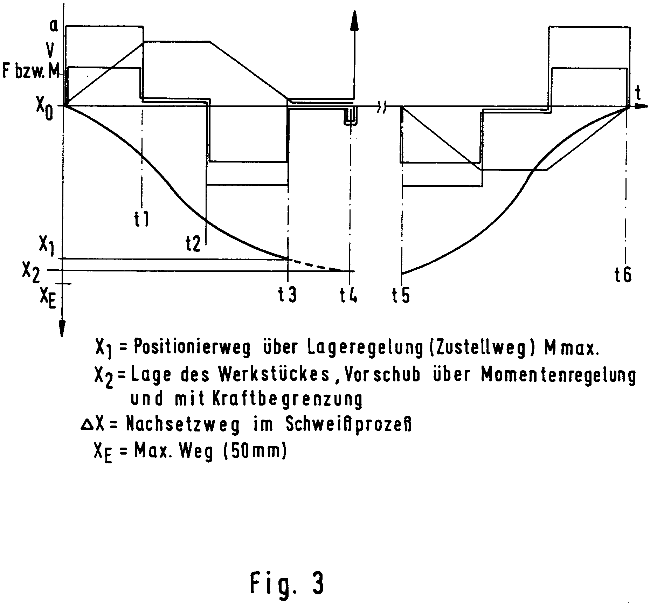

In Figur 3 ist ein Programmprofil für den elektrischen Schweißantrieb 13 dargestellt, der einen Zyklus mit den Funktionen
- Zustellen
- Suchen
- Aufsetzen
- Anpressen - Schweißen 1. Zyklus
- Nachsetzen
- Nachhalten
- Zurückfahren
ausgeführt.

### Zustellen (bei X < Xₗ)

positionieren über Lagerregelkreis (17, 19, 27, 28) auf Position Xₗ mit max. Dynamik (M_{S}). Der Wert Xₗ ist vorher aus den Schweißprozeßwerten und den geometrischen Daten, die in der Steuerung 15 abelegt sind, ermittelt.

### Suchen (bei Xₗ)

Der Antrieb 13 schaltet automatisch auf Momentenregelkreis (18, 29, 30, 20) um und sucht das Werkstück 14.

### Aufsetzen (bei X₂)

Der Antrieb 13 setzt mit einer leichten definierten Kraft auf dem Werkstück 14 auf. Messung von dx/dt = o bzw. dw/dt = o ergibt die Information über die Zielerreichung. In der Folge:

### Anpressen + Schweißen (bei X₂/t₄)

Erhöhung der Aufpreßkraft auf F max. (M. max). Einschalten des Schweißstromes. Einleitung des Nachsetzvorganges.

### Nachsetzen im Schweißvorgang (bei X₂)

Zwei mögliche Verfahren:
- Kraft F bzw. Drehmoment M geregelt.
   Messungen des Nachsetzweges Δx.
- Lageregelung auf x mit M = M max. scharfe Regeleinstellung (PID ).

Der Schweißstrom wird abgeschaltet bei:
- Erreichen eines max. zulässigen Δx oder
- nach einer definierten Zeit.
Umschalten auf nächsten Schritt:

### Nachhalten (bei X₂ - Δx)

Dieser Position wird eine definierte Zeit nachgehalten (lagegeregelt).

### Zurückfahren (bei t = t₅)

Einleitung der Rückfahrt mittels eines Schalters. Lagegeregelte Positionierung auf x = xo.

## Patentansprüche

1. Widerstandspreßschweißmaschine bestehend aus
- mindestens einem Schweißkopf (10) mit einer Elektrode (11)
- mindestens einem Schweißtransformator (12) zum Erzeugen eines Schweißstromes, der mit der Elektrode (11) verbunden ist
- mindestens einem Antrieb (13) zum Verfahren der Elektrode oder zum Erzeugen eines Elektrodendruckes auf dem Werkstück (14)
- und einer Steuerung (15), die mit dem Antrieb (13) und dem Schweißtransformator (12) verbunden ist,
gekennzeichnet durch
einen regelbaren elektromotorischen Antrieb (13) der eine Antriebspindel (16) oder Zahnstange aufweist.

2. Widerstandspreßschweißmaschine nach Anspruch 1,
dadurch gekennzeichnet,
daß die Antriebsspindel (16) mit dem Schweißkopf (10) so verbunden ist, daß bei Betrieb des Antriebs (13) der Schweißkopf (10) in eine vorgegebene Position verfährt und in der vorgegebenen Position einen vorgegebenen Elektrodendruck auf das Werkstück (14) ausübt.

3. Widerstandspreßschweißmaschine nach Anspruch 1 oder 2,
dadurch gekennzeichnet,
daß der Antrieb (13) einen Weggeber (17) und/oder Drehmomentgeber (18) aufweist, die mit einem Vergleicher (19 bzw. 20) verbunden sind.

4. Widerstandspreßschweißmaschine nach einem der Ansprüche 1 bis 3,
dadurch gekennzeichnet,
daß die Vergleicher (19 bzw. 20) in der Steuerung (15) oder dem Antrieb (13) vorgesehen sind.

5. Widerstandspreßschweißmaschine nach einem der Ansprüche 1 bis 4,
dadurch gekennzeichnet,
daß die Vergleicher (19 bzw. 20) mit Sollwertgebern (21 bzw. 22) für die Eingabe von Weg-Sollwerten und Drehmoment-Sollwerten verbunden sind.

6. Widerstandspreßschweißmaschine nach einem der Ansprüche 1 bis 5,
dadurch gekennzeichnet,
daß die Sollwertgeber (21, 22) mit der Steuerung (15) verbunden sind.

7. Widerstandspreßschweißmaschine nach einem der Ansprüche 1 bis 6,
dadurch gekennzeichnet,
daß der Antrieb (13) als Servomotor ausgebildet ist.

8. Widerstandspreßschweißmaschine nach einem der Ansprüche 1 bis 7,
dadurch gekennzeichnet,
daß der Antrieb (13) und die Antriebsspindel (16) parallel nebeneinander angeordnet und über ein Kupplungselement (24) miteinander verbunden sind.

9. Widerstandspreßschweißmaschine nach einem der Ansprüche 1 bis 8,
dadurch gekennzeichnet,
daß das Kupplungselement (24) ein Riemen (34) ist.

10. Widerstandspreßschweißmaschine nach einem der Ansprüche 1 bis 9,
dadurch gekennzeichnet,
daß die Steuerung (15) eine Strom- und/oder Spannungs- und/oder Leistungs- und/oder Temperaturregelung aufweist.

11. Verwendung eines regelbaren, elektromotorischen Antriebes (13) zum Verstellen, Schließen, Zustellen der die Schweißströme führenden Teile (10, 11).

12. Verfahren zum Widerstandspreßschweißen bei dem mindestens einer der Parameter Strom, Spannung, Leistung und/oder Temperatur geregelt werden,
dadurch gekennzeichnet,
daß mindestens einer der weiteren Parameter Kraft, Drehzahl und/oder Weg des elektrischen Antriebs (13) geregelt wird.

13. Verfahren nach Anspruch 12,
dadurch gekennzeichnet,
daß mindestens einer der Parameter Strom, Spannung, Leistung und/oder Temperatur und mindestens einer der Parameter Kraft, Drehzahl und/oder Weg von einer gemeinsamen Steuerung (15) geregelt werden.

14. Verfahren nach Anspruch 12 oder 13,
dadurch gekennzeichnet,
daß durch Ansteuern des Antriebes (13) die Elektrode (11) bis kurz (x₁) vor das Werkstück (14) gefahren wird und anschließend von der Weg - auf die Drehmomentregelung umgeschaltet wird.
